# EUROPEAN PATENT APPLICATION

(11) **EP 4 696 617 A1**
(43) Date of publication of application: **18.02.2026**
(21) Application number: 24194616.9
(22) Date of filing: 14.08.2024
(51) Int. Cl.: B65G 1/04

(54) **METHODS AND ROBOTIC CONTAINER-HANDLING VEHICLES FOR LIFTING A STORAGE CONTAINER**

(71) Applicant: AutoStore Technology AS, 5578 Nedre Vats (NO)
(72) Inventor: IVARJORD, Åsmund, 5578 Nedre Vats (NO)
(74) Representative: Kilburn & Strode LLP

(57) **Abstract**

The disclosure relates to methods for handling a storage container in an automated storage and retrieval system, the methods comprising lifting the storage container using a plurality of robotic container-handling vehicles in cooperation, and relates to corresponding vehicles, storage containers and systems.

## Description

### TECHNICAL FIELD

The disclosure relates to methods and robotic container-handling vehicles for lifting a storage container. More particularly, it relates to methods for lifting a storage container in an automated storage and retrieval system using a plurality of robotic container-handling vehicles in cooperation, and corresponding vehicles, storage containers and systems.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The automated storage and retrieval system is scalable by increasing the number of stacks of storage containers in the grid and extending the rail system on top of the grid. This provides an increase in the storage capacity in response to new requirements and can be done multiple times without needing to rebuild the whole system. This versatility comes from the standardisation of the grid, rails and container-handling vehicles, which is uniform across the system. On the other hand, the standardisation sets a limit on what can be stored in the grid, limited by the size and shape of the storage container. For example, the size of storage containers cannot be retroactively scaled up in response to a change of requirements for the system. In such an occurrence, a new system with different storage containers would be needed.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a side view of a robotic container-handling vehicle with a gripper plate in a raised position;
Fig. 5B shows a side view of a robotic container-handling vehicle with a gripper plate in a lowered position;
Fig. 6 shows a perspective view of a gripper plate for a robotic container-handling vehicle;
Fig. 7 shows a perspective view of a first storage container;
Fig. 8 shows a perspective view of a second storage container;
Fig. 9 shows a perspective view of a third storage container;
Fig. 10 shows a perspective view of the third storage container of Fig. 9 with a lid;
Fig. 11 shows a perspective view of a fourth storage container;
Fig. 12A shows a side view of a robotic container-handling vehicle with two gripper plates in a raised position;
Fig. 12B shows a side view of a robotic container-handling vehicle with two gripper plates in a lowered position;
Fig. 13 shows a method for handling a storage container in an automated storage and retrieval system;
Fig. 14 shows a method for handling a storage container in an automated storage and retrieval system;
Fig. 15 shows a plurality of robotic container-handling vehicles handing a storage container;
Fig. 16 shows a plurality of robotic container-handling vehicles handing a storage container; and
Fig. 17 shows a plurality of robotic container-handling vehicles handing a storage container.

### DETAILED DESCRIPTION

In overview, the disclosure relates to a method of lifting a storage container (also referred to herein as a 'bin') using a plurality of robotic container-handling vehicles (also referred to herein as 'robots') in an automated storage and retrieval system. This cooperation provides a way for robots to lift a larger storage container than a single robot could manage. Accordingly, an automated storage and retrieval system can be adapted to have storage containers of different sizes (in particular, different base shapes and areas) which provides more options for storing items in the system. For example, items that are too long for a standard size storage container, such as skis, can be stored in special storage containers having a length that is a multiple of the standard container length. Without robots lifting such a storage container in cooperation, as described herein, a separate storage system and additional specialist robots would be needed store and lift the larger containers. In contrast, the use of multiple robots to lift a container allows the system to allocate the available storage space into the right mix of standard size and larger containers according to the user's need. Therefore using a plurality of robots to lift a storage container in cooperation provides a more versatile system and a more efficient way to store and retrieve items that are larger than the typical size for the system. The larger containers also provide greater volume utilisation, due to utilising the space that would not be used between two standard-size containers (including the side walls of the containers).

### Automated storage and retrieval system overview

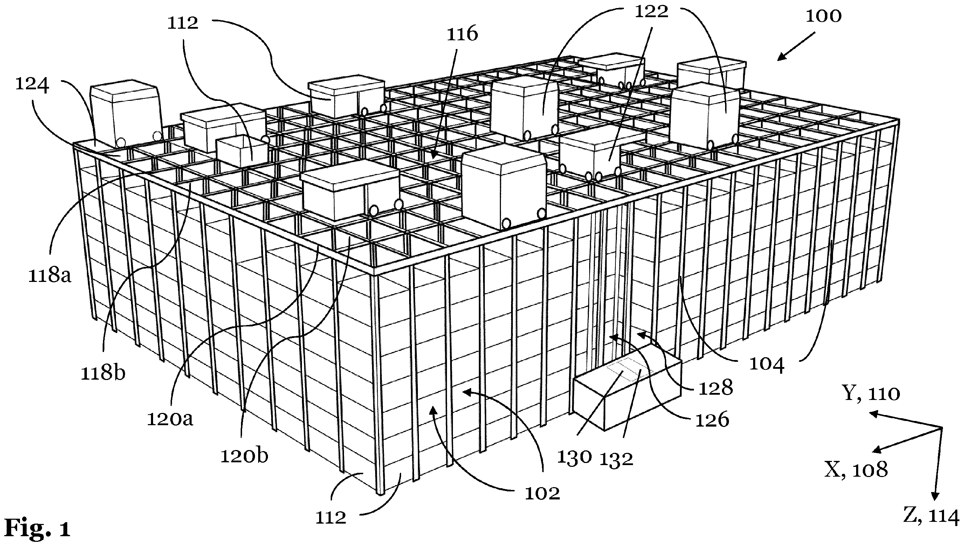

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

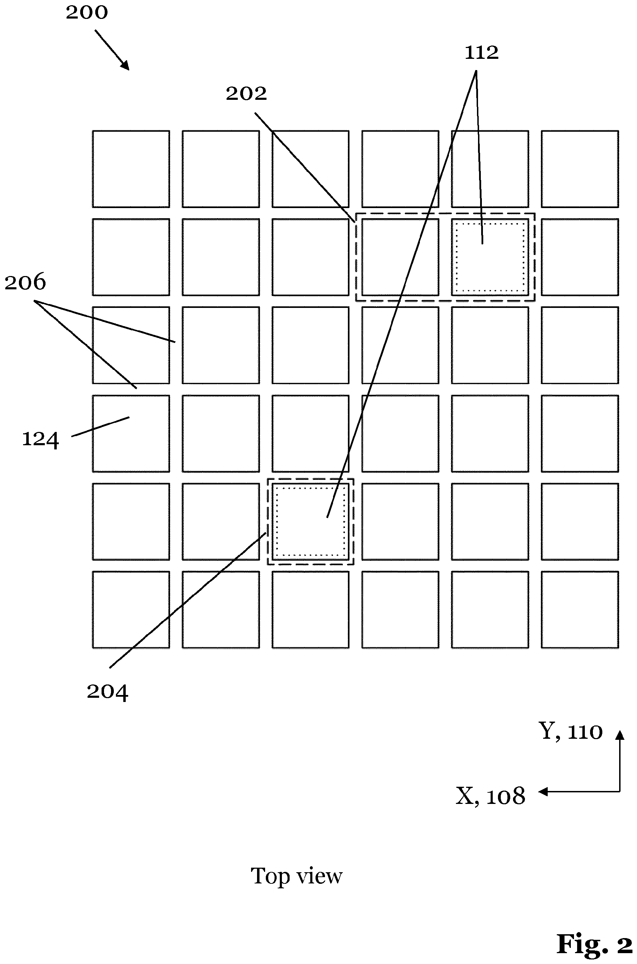

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

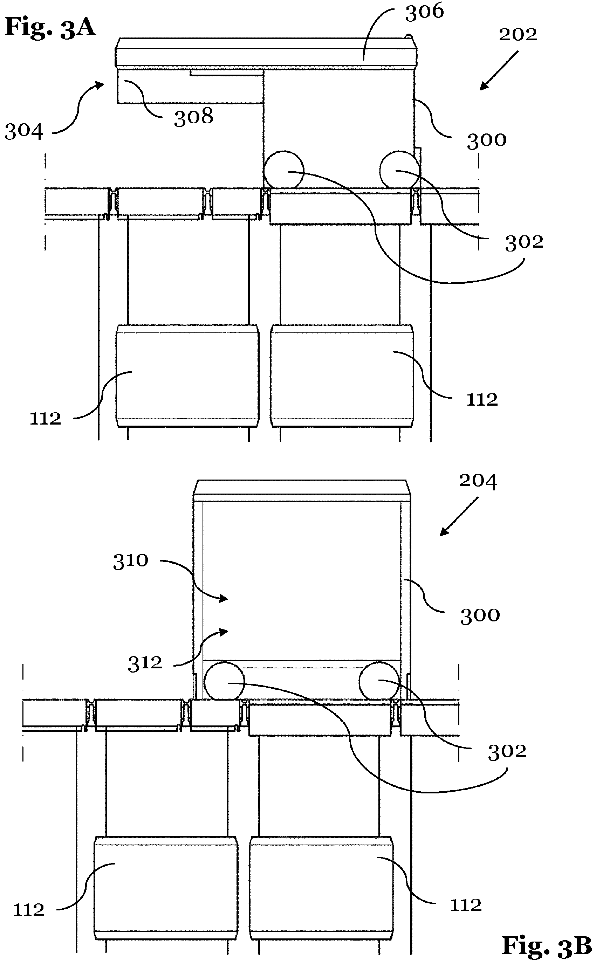

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

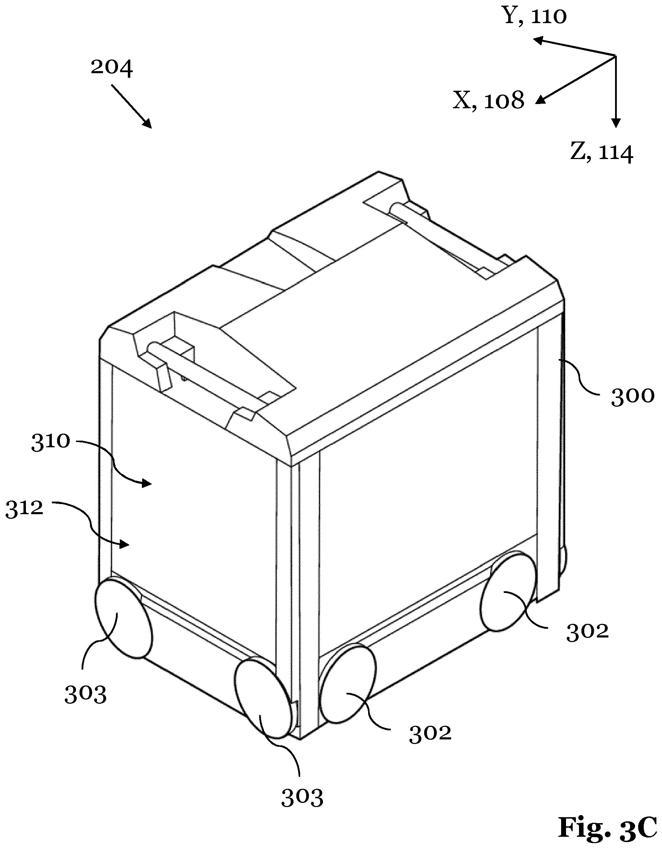

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

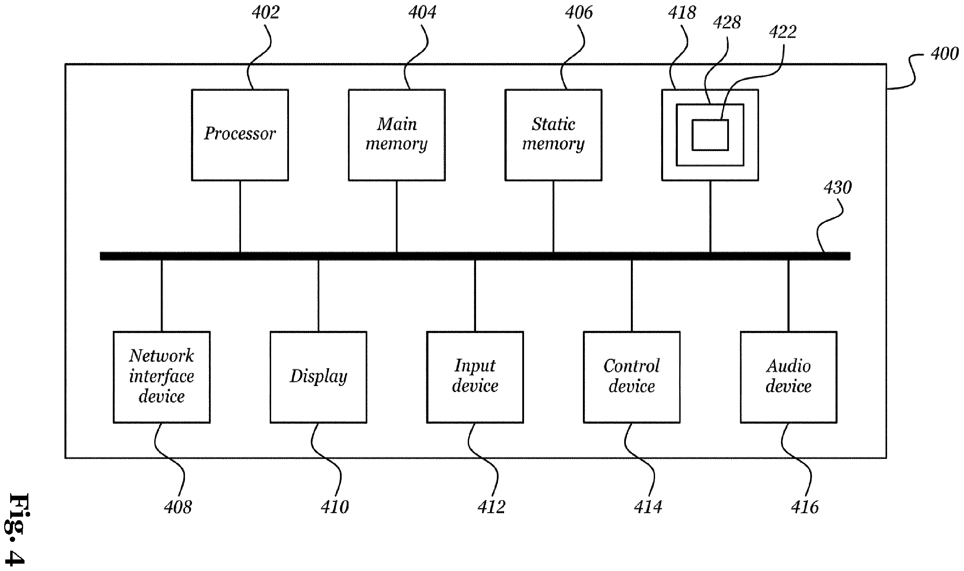

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 maybe a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Lifting devices and storage containers

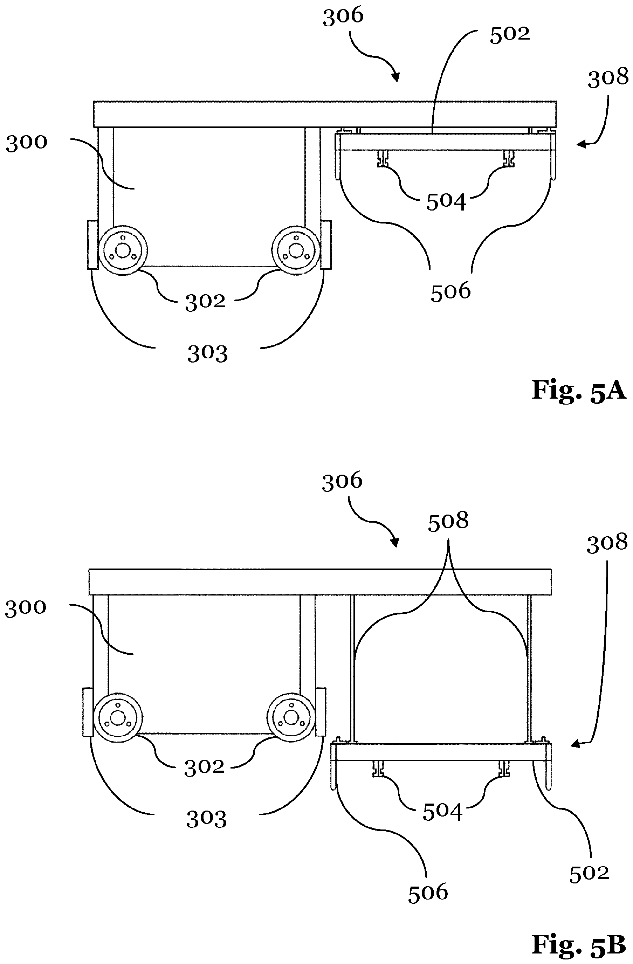

With reference to Fig. 5A and Fig. 5B, an example of a robotic container-handling vehicle 202 (such as described above with reference to Fig. 3A) has a second set of wheels 303 for permitting movement in a direction along rails or tracks 206 perpendicular to the first set of wheels 302. The gripping device 308 comprises a gripper plate 502 having gripping elements 504. The gripper plate 502 is suspended under the cantilever element 306 by wires 508. The gripper plate can be raised or lowered by the lifting device 304 of the robot (for example, some combination of motors, winches, gears, spools, axels, etc.) by retracting or letting out the wires 508. Fig. 5A shows the gripping device in a raised position. Fig. 5B shows the gripping device in a lowered position. The gripper plate also comprises guide rods 506 for aiding alignment of the gripping elements 504 when lowering the gripping device onto a storage container before lifting.

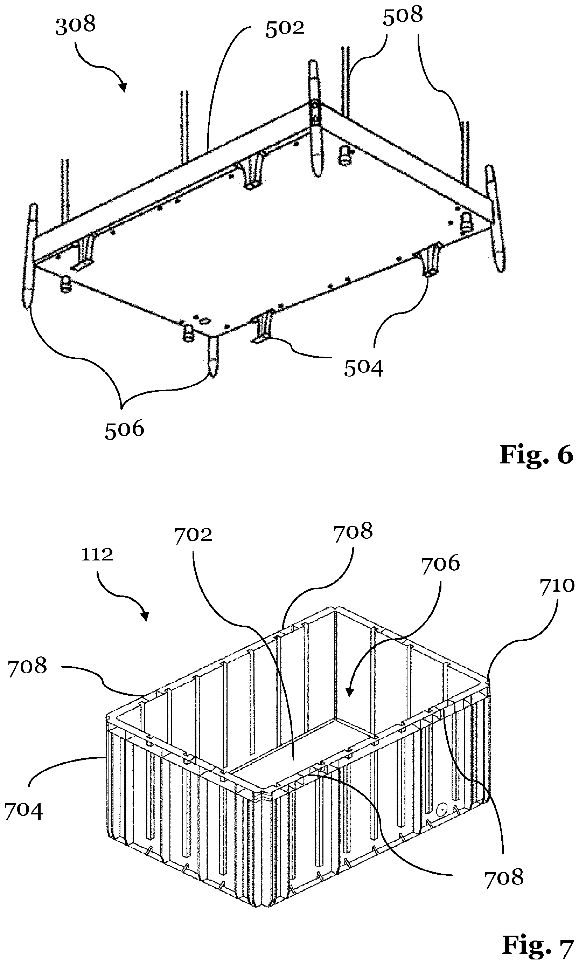

With reference to Fig. 6, in an example of the gripping device 308, the gripper plate has a rectangular shape and is suspended by four wires 508 attached, respectively, at each corner of the gripper plate. The wire attachment mechanism includes a stopper on the end of each wire below the gripper plate after the wire passes through an aperture in the gripper plate 502. The gripping device 308 comprises four pairs of gripping elements 504. Each pair of gripping elements 504 is arranged to splay after entering a handle 708, in the form of an aperture, of a bin 112. For example, each gripping element is rotatably coupled to the gripper plate 502 and controlled by an actuator to move the gripping element between withdrawn and splayed configurations. The pairs of gripping elements 504 are arranged to splay in a direction along a periphery of the gripper plate 502 that aligns with a rim of a bin 112 at a point where the handle 708 is located. The gripping elements 504 each have a hook portion to facilitate gripping onto the bin 112. The gripping device comprises four guide rods 506, one at each corner of the gripper plate 502, arranged to slide into guide slots 710 in the rim of the bin 112. The guide rods 506 ensure alignment between the gripper plate 502 and the bin 112 and, in particular, alignment between the gripping elements 504 and the respective handles 708 on the bin 112. To aid smooth entering of the guide rods 506 into the guide slots 710, the guide rods have a tapered end.

With reference to Fig. 7, a typical bin 112 for an automated storage and retrieval system has a substantially rectangular shape. The bin 112 has a base 702 and a peripheral wall 704 arranged around a periphery of the base 702 and extending substantially perpendicular to the base 702 such that the base 702 and periphery wall define a storage volume 706 therebetween. The storage volume 706 may be partially or fully enclosed and is used for holding items to be stored in the automated storage and retrieval system. At an upper edge of the peripheral wall 704, i.e., the edge opposite the base 702, the bin 112 has a rim running around the bin 112 defining an opening for placing or removing an item into the storage volume 706. The bin 112 comprises handles 708 positioned around the rim of the bin 112 to coincide with the position of the gripping elements 504 on the gripper plate 502 of a robotic container-handling vehicle. The handles 708 are apertures for receiving the gripping elements 504 and being lifted thereby. The bin 112 comprises guide slots 710 at the corners of the bin 112 to receive guide slots of the gripper plate 502 of a robotic container-handling vehicle to provide proper alignment of the bin 112 and gripper plate 502.

Although a particular example of gripping device 308 and bin 112 are described above, alternative gripping mechanisms and bin features are also suitable for implementing the present disclosure. For example, in some arrangements the shapes of the gripper plate 502 and bins 112 are not rectangular but a different tessellating shape. In some arrangements, a different form of gripping element is used, e.g. using hooks, clips, electromagnets, etc. In some arrangements, a different number of gripping elements, e.g., one pair, two pairs, three pairs, five pairs, six pairs, or any number of single gripping elements, etc., according to the requirements of the implementation, with corresponding suitable handles of the storage container. In some arrangements, a different positioning of gripping elements is used, e.g., on more or different sides of the periphery of the gripper plate 502, or different positions along the sides of the periphery of the gripper plate, according to the particular implementation and to match the type of bin 112 to be lifted. For example, Fig. 5A and Fig. 5B show the gripping elements 504 arranged on the shorter sides of the rectangular gripper plate (left and right sides as looking from the body 300 along the cantilever elements 306), whereas Fig. 6 shows the gripping elements 504 arranged along the longer sides of the rectangular gripper plate (front and back sides as looking from the body 300 along the cantilever element 306). In other arrangements, the gripping elements may be arranged in either or both of these positions, and/or in other positions. In some arrangements, guide rods 506 are absent if not required to achieve suitable alignment between gripper plate 502 and bin 112.

### Large storage containers

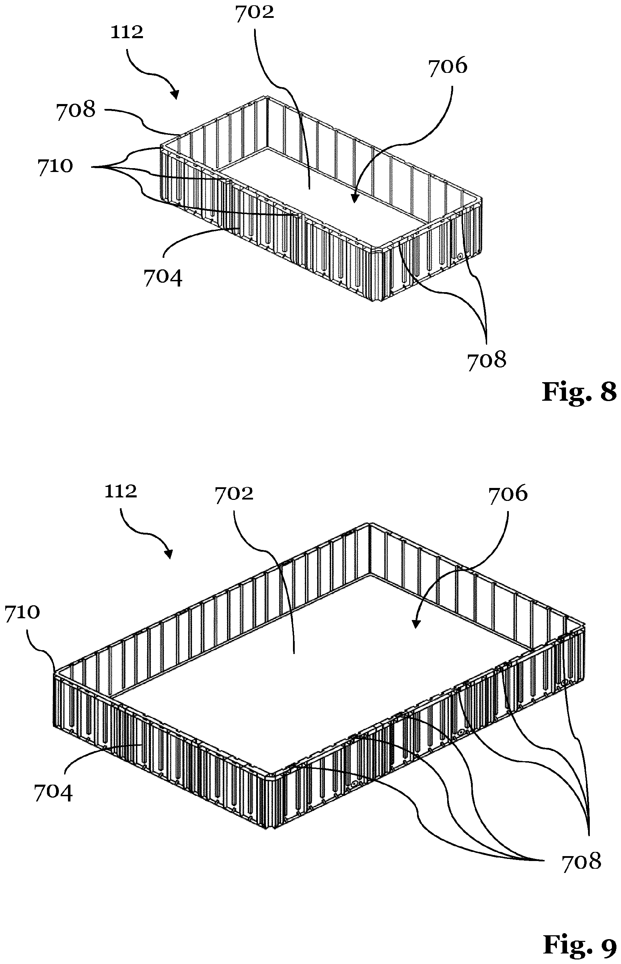

With reference to Fig. 8, an example storage container, suitable to be lifted by a plurality of robotic container-handling vehicles, is a bin 112 having a dimension in a first direction three times the corresponding dimension of the standard bin 112 as described above with reference to Fig. 7. This example can be referred to as a 3 by 1 (or 3 x 1) bin, using the format `X by Y', as the bin 112 has a dimension in the X direction 108 triple that of the standard bin 112 dimension in the X direction and the bin 112 has a dimension in the Y direction 110 equal to that of the standard bin 112 dimension in the Y direction. Other than the dimensions of bin 112, the bin 112 has all of the features of the standard size 1 × 1 bin 112 as described above with reference to Fig. 7, namely base 702, peripheral wall 704, storage volume 706, handles 708, and guide slots 710. The 3 × 1 bin 112 also comprises guide slots 710 part way along the sides in the X direction, spaced apart according to the dimension of the standard 1 × 1 bin 112 in the X direction. Accordingly, the guide slots 710 align with where the guide rods 506 of a gripper plate 502 to receive the guide rods 506 when being lifted by the gripper plate 502. The location of the handles 708, in the form of apertures for receiving the gripping elements 504, are the same as for the 1 × 1 bin 112 so that the gripper plate 502 suitable for lifting a standard 1 × 1 bin is also suitable for lifting the 3 × 1 bin 112. In particular, the larger size of the 3 × 1 bin 112 means that a first robotic container-handling vehicle can lift a first end of the 3 × 1 bin 112 in cooperation with a second robotic container-handling vehicle lifting a second end of the 3 × 1 bin 112. Therefore the 3 × 1 bin 112 can be lifted evenly and securely by a plurality of robotic container-handling vehicles 202. This also means that the 3 × 1 bin 112 can carry a greater weight of items than could be lifted by a single robotic container-handling vehicle. The larger size of the 3 × 1 bin 112 also means that there is a greater storage volume 706 compared to the 1 × 1 standard bin 112 and larger items can be received therein.

With reference to Fig. 9, an example storage container suitable to be lifted by a plurality of robotic container-handling vehicles is a bin 112 having dimensions in a first direction and a second direction each three times the corresponding dimension of the standard bin 112 as described above with reference to Fig. 7. This example can be referred to as a 3 × 3 bin 112. The 3 × 3 bin 112 has the same features as the 1 × 1 bin 112 as described above with reference to Fig. 7 and the 3 × 1 bin 112 as described above with reference to Fig. 8. The 3 × 3 bin 112 has a corresponding number of handles 708 according to its dimension, providing a plurality of lifting locations where a robotic container-handling vehicle can be positioned to lift the bin 112 using a gripper plate 502. With reference to Fig. 9, the 3 × 3 bin 112 has six handles 708 along the rim in each of the sides along Y direction. This provides three lifting locations along each side extending in the Y direction. In other arrangements, a 3 × 3 bin 112 has more or fewer handles 708 and corresponding lifting locations along its sides. The bin 112 shown in Fig. 9 has guide slots 710 only at the corners of the bin 112, but other examples have guide slots 710 located along each side of the bin 112 in the way described with reference to Fig. 8.

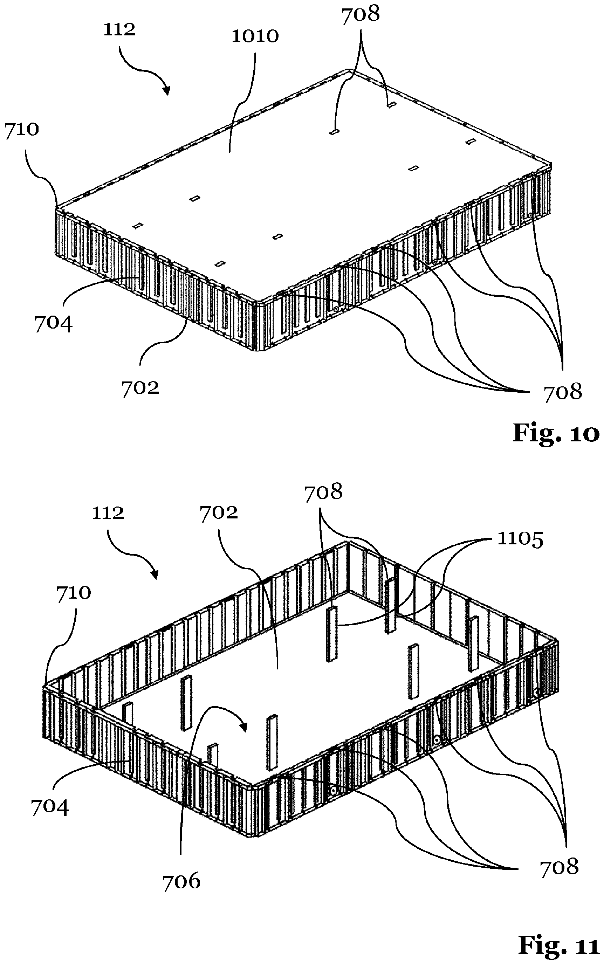

With reference to Fig. 10, in an example, a 3 × 3 bin 112 comprises a lid 1010 having a plurality of handles 708 disposed thereon. The lid 1010 is configured to releasably attach to the peripheral wall 704. The releasable attachment is by any suitable attachment mechanism, e.g., clips, clasps, hooks, screws, etc. This allows the lid 1010 to be removed when placing or removing storage items into or from the bin 112. The lid 1010 can then be securely attached to the peripheral wall 704 for the bin 112 to be handled by robotic container-handling vehicles 202 and stacked into stacks with other bins in the automated storage and retrieval system. The handles 708 on the lid 1010 are located away from the peripheral wall 704 at locations corresponding to the position of the gripping elements 504 of the gripper plate 502 of the robot configured to lift the bin 112 in cooperation with other robots. For robots using a gripping device 308 as described above with reference to Fig. 5A, Fig. 5B, and Fig. 6, this provides an even weight distribution between the gripping elements 504 and across the gripper plate 502, which in turn provides an even weight distribution between wires 508.

With reference to Fig. 11, in an example, a 3 × 3 bin 112 comprises projections projecting from the base 702 in the form of posts 1105, with a respective handle 708 located at the top of each post 1105. This provides handles away from the peripheral wall 704 as an alternative to handles 708 located on a lid 1010 as described above with reference to Fig. 10. The posts 1105 protrude from the base 702 and therefore provide the handles with a support for suspending the bin 112 therefrom, while retaining an open storage volume 706 for storing and retrieving items without an additional process of detaching a lid to access the storage volume 706. In other arrangements, the projections may project from the peripheral walls 704 instead of the base 702.

The general principles of large storage containers, i.e., storage containers having at least one dimension that is a multiple (greater than one) of a corresponding dimension of the standard 1 × 1 bin 112, is explained above with reference to a 3 × 1 bin 112 and a 3 × 3 bin 112. However, it will be appreciated that many other sizes of large bins are possible, e.g., 1 × 2, 1 × 3, 1 × 4, 2 × 1, 2 × 2, 2 × 3, 2 × 4, 3 × 2, 3 × 4, 4 × 1, 4 × 2, 4 × 3, 4 × 4, etc., wherein the same general principles apply. The (one or more) greater dimension of the large storage container means that a base area of the bin 112, i.e., the area of the base 702, is greater than the overhang area of the cantilever element, i.e., the area of the cantilever element which is not directly above the body of the robot, from which the gripper plate is suspended. Likewise, the base area of the large container 112 is greater than the area of a gripper plate of the robot 202. The (one or more) greater dimension of the large storage container means that an access area, i.e., the area defined between adjacent tracks or rails 118a, 118b in a first direction and adjacent tracks or rails 120a, 120b in a second direction, of access openings 124 which receive the large containers (under which the large containers are stacked in the grid 100) is greater than the overhang area of the cantilever element. Likewise, the access area of the access opening for receiving a large container is greater than the area of a gripper plate of the robot 202.

The positioning of the handles 708 in any of the example large bins correspond to the gripper plate 502 and gripping elements 504 to be used to lift the bins 112, but otherwise can be positioned anywhere around the rim of the bin 112, or away from the peripheral wall 704 on a lid 1010 or posts 1105 as described above according to Fig. 10 and Fig. 11. The number of handles 708 can vary between large containers, according to the number of lifting positions desired for a particular implementation. Although the handles on the storage container described above have the form of an aperture, in other examples the handles include loops, hooks, clips slots, magnets, or any combination thereof for releasable attachment to the gripping elements of a suitable robotic container-handling vehicle. The guide slots 710 may be positioned wherever required (e.g. at corners or along sides) to receive respective guide rods 506 of the gripper plates 502 of the robots to be used to lift the bin 112. In other arrangements, the guide slots 710 are not required.

### Multiple gripper plate robots

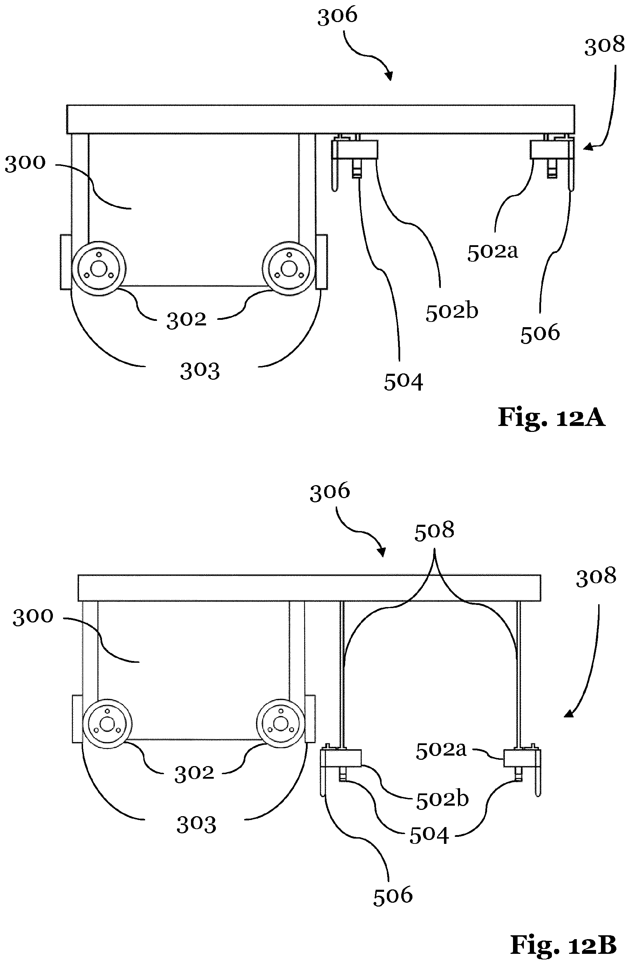

With reference to Fig. 12A and Fig. 12B, an example robotic container-handling vehicle 202 comprises multiple gripper plates 502a, 502b instead of a single gripper plate 502 as described above with reference to Fig. 5A and Fig. 5B. In particular, the gripping device 308 of the robot comprises a first gripper plate 502a at a distal end of the cantilever element 306 away from the body 300 (also referred to as 'a distal portion') and a second gripper plate 502b at a proximal end of the cantilever element with respect to the body 300 (also referred to as 'a proximal portion'). The other features of the robotic container-handling vehicle 202 may otherwise have any of the features or variations thereof as described above with reference to Fig. 3A, Fig, 5A, or Fig. 5B. The first gripper plate 502a and second gripper plate 502b have respective gripping elements 504 and guide rods 506 that function as described above. As an alternative to the gripping elements described above with reference to Fig. 5A and Fig. 5B, the gripping elements 504 of the first gripper plate 502a are aligned perpendicular to the cantilever element 306. Accordingly, the gripping elements 504 align with handles on the rim of a 1 × 1 bin 112 along the longer dimension, which is in the Y direction. The gripping elements 504 are located on the respective gripper plates 502a, 502b at the front and back of the cantilever element (that is, the end of the cantilever element away from the body 300 and near the body 300, respectively). The gripping elements 504 are located under a midline of the respective gripper plate 502a, 502b, so that the gripper plate hangs level when suspended by a wire 508. The midline is a line bisecting the gripper plate passing through the centre (and, in particular, the centre of gravity) of the gripper plate. Likewise, the wires 508 are attached to the gripper plate 502a, 502b along the midline so that the gripper plate 502a, 502b can be raised or lowered, including when carrying a load via the gripping elements 504, while staying level. More generally, the gripping elements are located under the gripper plate along a line that runs parallel to a line between the attachment points of the wires, to keep the gripper plate level during lifting.

The first and second gripper plates 502a, 502b can be raised or lowered independently of the other. For example, both gripper plates may be lowered in unison to engage and lift a standard 1 × 1 bin 112 using the gripping elements 504 of both the first and second gripper plates 502a, 502b, e.g., as shown in Fig. 12B. However, some large bins 112, e.g., as described above with reference to Fig. 8 and Fig. 9, do not have handles 708 located underneath the first gripper plate 502a gripping elements 504 when the robot is in a lifting position next to the bin 112. In such cases, the robot can lower only the second gripper plate 502a to engage the handles 708 on the rim of the bin 112. The bin 112 is then balanced by the other robots lifting the bin 112 at other lifting locations. Accordingly, in these examples, no handles 708 away from the peripheral wall of the bin 112 are required to lift the bin 112 while maintaining the gripper plate 502b level.

### Automated storage and retrieval system with large storage containers

An automated storage and retrieval system having robots 202 configured to lift a storage container 112 in cooperation has any of the features described above with reference to Fig. 1, Fig. 2, Fig. 3A, Fig. 3B, and Fig. 4. For an automated storage and retrieval system including large storage containers 112 as described above with reference to Fig. 7, Fig. 8, Fig. 9, Fig. 10, and Fig. 11, at least one of the access openings 124 formed between the rails 118, 120 has corresponding dimensions for receiving the large container 112 of the appropriate size. The area of the access openings is therefore greater than the overhang area of the cantilever element of robots configured to lift a standard 1 × 1 bin 112. The automated storage and retrieval system may further comprise a port column 126, 128 having corresponding dimensions for receiving the large container 112 of the appropriate size so that the large container can be entered or removed from the system. To provide the access opening 124 for the large container 112, one or more section of the rails or tracks 118, 120 is removed to produce an access opening having one or more dimensions that is a multiple of the corresponding dimension of a standard 1 × 1 bin access opening. The rail system or network 116, with the larger access opening 124 can be assembled and used in the same way as described above with reference to Fig. 1.

### Methods for lifting the storage container

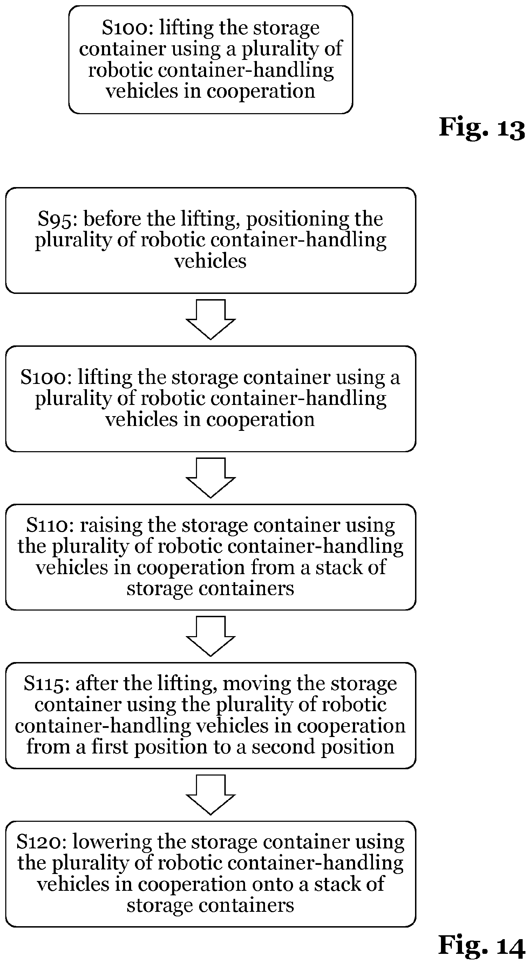

With reference to Fig. 13, a method for handling a storage container, e.g., as described above with reference to Fig. 8, Fig. 9, Fig. 10, or Fig 11, in an automated storage and retrieval system comprises lifting S100 the storage container using a plurality of robotic container-handling vehicles in cooperation. The plurality of robotic container-handling vehicles may be as described above with reference to Fig. 1, Fig. 2, Fig. 3A, Fig. 5A, Fig. 5B, Fig. 12A, or Fig. 12B. The storage container may be as described above with reference to Fig. 7, Fig. 8, Fig. 9, Fig. 10, or Fig. 11. In this context, 'in cooperation' can be understood to mean that the plurality of robotic container-handling vehicles each bear part of the weight of lifting the storage container at the same time. For example, the plurality of robotic container-handling vehicles can be arranged around the storage container, each engaging the storage container with a respective gripping device, to simultaneously lift the storage container.

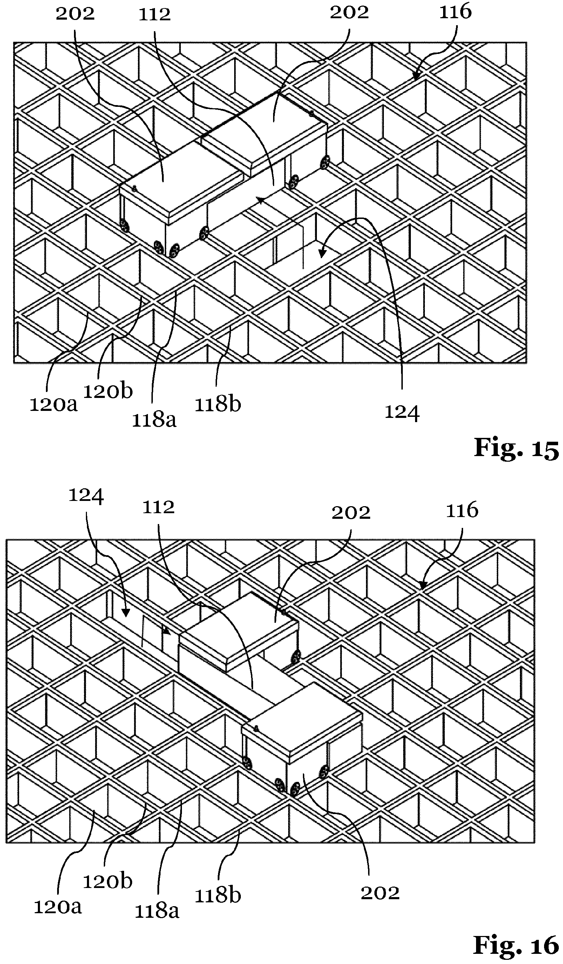

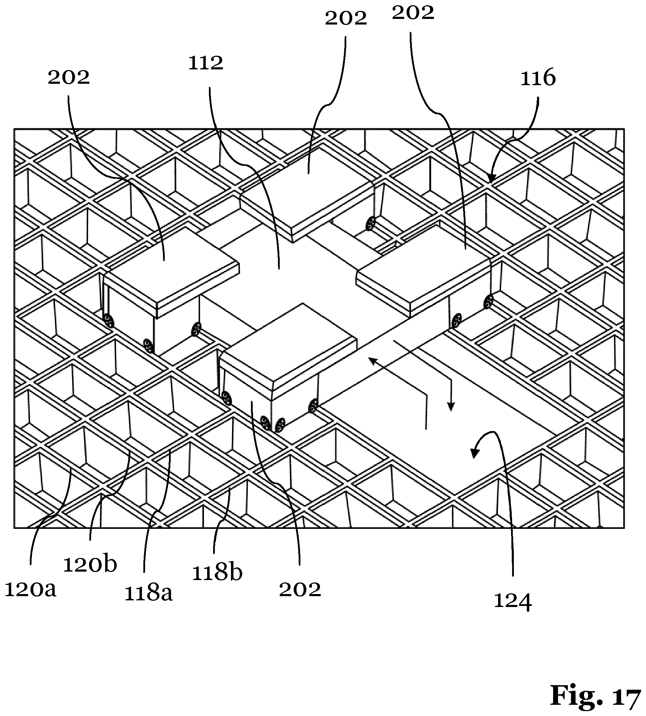

With reference to Fig. 14, in an example, the lifting S100 is part of a method comprising a series of actions to handle the storage container in an automated storage and retrieval system. A combination of these actions can be used to store a bin 112 in the system, remove a bin 112 from a storage location, and transport the bin 112 around the grid 100 for the bin 112 to be stored elsewhere or removed from the system, e.g., at a port. The method will be described with reference to three examples: Fig. 15, wherein a 2 × 1 bin 112 is lifted by two robotic container-handling vehicles 202; Fig. 16, wherein a 1 × 3 bin 112 is lifted by two robotic container-handling vehicles 202; and Fig. 17, wherein a 3 × 3 bin 112 is lifted by four robotic container-handling vehicles 202.

The method comprises, before the lifting S100, positioning S95 the plurality of robotic container-handling vehicles. For example, when the starting point of the bin 112 is a stack below an access opening 124, defined between rails or tracks 118a, 118b in a first direction and rails or tracks 120a, 120b in a second direction, the positioning S95 comprises each of the robots 202 approaching the bin 112 so that their respective gripping devices 308 each partially overhangs the bin 112. With reference to Fig. 15, for a 2 × 1 bin this means that the two robots 202 approach opposite sides of the bin 112 in the X direction 108 along the same pair of rails 118a, 118b. When in position, the robots 202 overhang substantially all of the 2 × 1 bin 112. This lifting arrangement is rotationally symmetric about the centre of the 2 × 1 bin 112, with rotational symmetry of order 2, and reflectionally symmetric about a plane parallel to the Y direction and running through the centre of the 2 × 1 bin 112. With reference to Fig. 16, for a 1 × 3 bin the two robots 202 approach opposite sides of the bin 112 along different parallel rails in the X direction 108, one at each end of the 1 × 3 bin 112 in the Y direction. This lifting arrangement is rotationally symmetric about the centre of the 1 × 3 bin 112, with rotational symmetry of order 2. With reference to Fig. 17, for a 3 × 3 bin the four robots 202 approach the 3 × 3 bin 112 with two robots 202 from each of two opposite sides, with one robot 202 at each corner of the 3 × 3 bin 112. This lifting arrangement is rotationally symmetric about the centre of the 3 × 3 bin 112, with rotational symmetry of order 2, and reflectionally symmetric about planes parallel to the Y direction and the X direction, each plane running through the centre of the 3 × 3 bin 112. It will be appreciated that there are multiple suitable lifting configurations for each bin size and number of robots.

Returning to Fig. 14, the method comprises raising S110 the storage container using the plurality of container-handling vehicles 202 in cooperation from a stack of storage containers. This may be a separate action to the lifting S100 in a continuous motion with the lifting S100 (e.g., wherein lifting is the transferral of the weight of the bin 112 from the stack or other bin support to the robots 202, without substantial change in elevation of the bin 112). In some examples, the raising S110 comprises all of the robots 202 being used to lift the bin 112 in cooperation raising their respective gripping device 308 simultaneously and at the same rate, e.g. starting at the same time, ending at the same time, with the same speed profile between the start and end time so that at all times the bin 112 remains level. The raising S110 may be raising the bin 112 from a stack below the rail system or network 116. In other examples, the method comprises raising the bin 112 from a port column 126, 128.

The method comprises, after the lifting S100, moving S115 the storage container 112 using the plurality of robotic container-handling vehicles in cooperation from a first position, e.g., the lifting position, to a second position. This is done using the same locomotion mechanism of the individual robots 202, e.g. sets of wheels 302, 303, and a controlled drive mechanism, except that the movement is coordinated so that the distance between robots 202 remains constant until the robots 202 have let go of the bin 112. When moving from the lifting position with the robots 202 positioned around an access opening 124 for a large container 112, there will generally be some restrictions on the direction of travel to avoid the gaps in the tracks or rails 118, 120 that define the large access opening 124. With reference to Fig. 15, the two robots 202 can move in either X direction or Y direction as the robots 202 are not positioned on the rails in the Y direction that have a gap in the rails to provide the large access opening 124. With reference to Fig. 16, the robots 202 must move in the Y direction (shown by an arrow) after lifting the 1 × 3 bin 112 through the access opening 124 so that the wheels avoid gaps in the rails 118 in the X direction. With reference to Fig. 17, the robots 202 must move in the Y direction (shown by an arrow) after lifting the 3 × 3 bin 112 so that the wheels avoid gaps in the rails 118 in the X direction. Further, because the robots 202 are positioned only on opposite sides of the bin 112 (and not of the other two sides), the gaps in the rails can be avoided by moving parallel to the opposite sides on which the robots are positioned. In any of the examples of Fig. 15, Fig. 16, and Fig. 17, the movement away from the lifting position can be reversed with reference to the second position above a second access opening (not shown) ready for lowering and depositing the bin 112.

Returning to Fig. 14, the method comprises lowering S120 the storage container using the plurality of robotic container-handling vehicles in cooperation onto a stack of storage containers. For example, the lowering S100 is the reverse action to the raising S110 as discussed above and can be done in the same way except reversed. The lowering S120 may be lowering the bin 112 onto a stack below the rail system or network 116. In other examples, the method comprises lowering the bin 112 into a port column 126, 128.

In some examples, methods of handling the storage container comprise only some of the actions described above with reference to Fig. 14, or any combination thereof, repeated actions, additional actions, or different order of actions. For example, some methods comprise moving the storage container using the plurality of robots in cooperation while lifting S100 the container, such that the plurality of robots carry the weight of the storage container between them. In some examples, before the lifting S100, the method includes lowering a gripper plate 502 from each robot through the access opening 124 and engaging handles 708 of the storage container 112 with gripping elements 504. In some examples, after the lifting S100 and subsequent lowering S120, the method includes gripping elements 504 disengaging handles 708 of the storage container 112 and raising a gripper plate 502 from each robot through the access opening 124.

In any of the methods described above with reference to Fig. 13, Fig. 14, Fig. 15, Fig. 16, and Fig. 17, the robots 202 of the plurality of robots may start the method in any position on the rail system or network 116 and travel to their respective lifting positions before the lifting S100. The robots 202 may arrive at different times at their lifting position and wait for the others to arrive before commencing the lifting. After stopping the lifting S100, the robots 202 may continue to any other part of the rail system or network 116.

The control of the plurality of robotic container-handling vehicle can be performed in any way as described above relating to the operation of the automated storage and retrieval system as described with reference to Fig. 1 and Fig. 2, and/or using a computing device as described above with reference to Fig. 4. In some examples, the control of the robots 202 to lift the storage container in cooperation is coordinated by a control centre of the automated storage and retrieval system, e.g. a server, via any suitable communication channel with the robots 202. In some examples, one or more of the robots may take on a lead role and communicate with other robots of the plurality of robots to coordinate the lifting. The control signals sent to the robots (whether from a control centre, other robots, or other controller), can include any of a start lifting signal, a stop lifting signal, a start moving signal, a stop moving signal, a raise/lower signal and defining a raise/lower speed, etc., along with one or more timing signal to coordinate the actions.

### General disclosures

In an aspect of the disclosure, there is provided a method for handling a storage container in an automated storage and retrieval system, the method comprising lifting the storage container using a plurality of robotic container-handling vehicles in cooperation. This provides a way to lift storage containers larger than the standard size used for the automated storage and retrieval system.

Each robotic container-handling vehicle of the plurality of robotic container-handling may comprise: a vehicle body; a cantilever element protruding from the vehicle body; and a gripping device configured to be raised or lowered from the cantilever element, wherein the gripping device is configured to releasably engage the storage container.

A base area defined by a base of the storage container may be greater than an overhang area defined by the cantilever element. This provides a larger and/or more versatile storage area, and corresponding volume, to store items in the storage container.

The gripping device may be suspended below the cantilever element by a plurality of wires.

The lifting may comprise gripping the storage container using more than one gripping device of the plurality of robotic container-handling vehicles, e.g., one respective gripping device of each robotic container-handling vehicle, and simultaneously raising the gripping devices to suspend the storage container.

The gripping device may comprise a first gripper plate having one or more first gripping element protruding from the first gripper plate, the one or more first gripping element configured to releasably grip the storage container. The gripping device may comprise a second gripper plate having one or more second gripping element protruding from the second gripper plate, the one or more second gripping element configured to releasably grip the storage container. The one or more first or second gripping element may comprise four pairs of gripping elements located around a periphery of the respective gripper plate.

The first gripper plate may be suspended below a distal portion of the cantilever element. The second gripper plate may be suspended below a proximal portion of the cantilever element. In other words, the first gripper plate may be suspended below a portion of the cantilever element away from the vehicle body and the second gripper plate may be suspected below a portion of the cantilever element near the vehicle body.

The first gripper plate may be suspended below a first portion of the cantilever element and the second gripper plate suspended below a second portion of the cantilever element, wherein the first and second portions are on opposite sides of the cantilever element, the opposite sides each adjacent to the side of the cantilever element connected to the vehicle body. For example, the first and second portions may be a left portion and a right portion, as viewed from the vehicle body looking along the cantilever element.

The one or more gripping elements of the first gripper plate may be two pairs of gripping elements located under a periphery of the cantilever element and/or the one or more gripping elements of the second gripper plate may be two pairs of gripping elements under a periphery of the cantilever element.

The first gripper plate and second gripper plate may be configured to be raised or lowered and grip the storage container independently of the other. The respective gripping element(s) of the gripper plates may be configured to releasably engage the storage container independently of the gripping element(s) of the other gripper plate. Having two gripper plates provides a way to lift the storage container from its periphery even when the storage container is larger than the cantilever element and larger than the gripper plate. This provides more even weight distribution across the gripper plate compared to if a single gripper plate were used with some gripping elements having no part of the storage container to engage due to the larger size of the storage container.

The one or more first gripping element(s) and/or the one or more second gripping element(s) may be positioned on a midline of the respective first/second gripper plate. The one or more first gripping element(s) and/or one or more second gripping element(s) may be positioned such that the weight of the gripper plate, and any storage container gripped by the gripping elements, is evenly distributed by the plurality of bands that suspend the gripping device.

The method may comprise, before the lifting, positioning the plurality of robotic container-handling vehicles symmetrically around storage container. The positioning may put the vehicles into an arrangement that is rotationally symmetric around the storage container (e.g. with rotational symmetry of order 2 or of order 4), or reflectively symmetric about one or more plane passing through the centre of the storage container. This provides an even distribution of weight between the plurality of robotic container-handling vehicles lifting the storage container.

The method may comprise, before the lifting, positioning the plurality of robotic container-handling vehicles such that one robotic container-handling vehicle is positioned at each corner of storage container. This provides a stable lifting configuration between the plurality of robotic container-handling vehicles lifting the storage container. This also provides a stable transporting configuration for the vehicles to transport the container after lifting.

The method may comprise, before the lifting, positioning the plurality of robotic container-handling vehicles such that each robotic container-handling vehicle is on either a first side of the storage container or a second side of the storage container, wherein second side is opposite the first side. In other words, the robotic container-handling vehicles are all positioned on two opposite sides of the storage container, with no robotic container-handling vehicles on the remaining two sides. This provides a direction for moving the storage container once lifted, i.e., in a direction parallel to the first and second sides where the robotic container-handling vehicles are positioned, without any vehicle needing to traverse the access opening that the storage container has come out of.

The positioning may comprise meeting any combination of one, two, or three of the above conditions for positioning the vehicles before lifting.

The method may comprise raising the storage container using the plurality of robotic container-handling vehicles in cooperation from a stack of storage containers.

The method may comprise, after the lifting, moving the storage container using the plurality of robotic container-handling vehicles in cooperation from a first position to a second position. This may comprise coordinating the travel of the plurality of robotic container-handling vehicles to move the storage container to a port or port column for exiting the storage framework, or to a storage container stack for storing the storage container.

The method may comprise lowering the storage container using the plurality of robotic container-handling vehicles in cooperation onto a stack of storage containers.

The method may comprise any combination of one, two, three, or four of the above actions, to achieve the required handling of a storage container in an automated storage and retrieval system.

Any or all of the lifting, positioning, raising, lowering, and/or moving described above may comprise sending a control signal to each of the plurality of vehicle including an action instruction and a timing instruction. The control signal may be sent from a control centre. The control signal may be sent from one of the plurality of robotic container-handling vehicles to one or more other of the plurality of robotic container-handling vehicles. The timing instruction may comprises a designated time to start the action, e.g. start the lifting. The timing instruction may comprise an instruction to wait until a designated lift time.

In an aspect of the disclosure, there is provided an automated storage and retrieval system for storing and retrieving storage containers. The system comprises a storage framework and a plurality of robotic container-handling vehicles configured to lift a storage container in cooperation. This provides a way to lift storage containers larger than the standard size used for the automated storage and retrieval system. The plurality of container-handling robots are configured to store and retrieve the storage container into and out of the storage framework. The storage framework (also referred to herein as `a frame') comprises a plurality of vertical frame members and a rail system arranged across the vertical frame members. The rail system comprises rails arranged to guide movement of the plurality of container-handling vehicles across the framework. The rail system defines access openings for lifting and lowering the storage container through the rail system.

Each robotic container-handling vehicle of the plurality of robotic container-handling may comprise: a vehicle body; a cantilever element protruding from the vehicle body; and a gripping device configured to be raised or lowered from the cantilever element, wherein the gripping device is configured to releasably engage the storage container.

A first access area defined by access openings of a first subset of access openings may be greater than an overhang area defined by the cantilever element. This provides for larger storage containers to be stored in the storage framework, increasing the types and sizes of goods that can be stored therein.

The automated storage and retrieval system may be configured to perform any of the features of the methods described above. The plurality of robotic container-handling vehicles may have any of the optional features described above.

In an aspect of the disclosure, there is provided a storage container for storing in the automated storage and retrieval system as described above, wherein the storage container is configured to be lifted by the plurality of robotic container-handling vehicles in cooperation. This allows the storage container to be stored in an automated storage and retrieval system having a smaller standard storage container size than the storage container.

The storage container may be suitable for being handled according to any of the features of the methods described above, using a plurality of robotic container-handling vehicles according to any of the features described above.

The storage container may comprise a base and a peripheral wall arranged around a periphery of the base and substantially perpendicular to the base, such that the base and the peripheral wall define a storage volume. The storage container may comprise a handle for suspending the storage container therefrom, wherein the handle is located away from the peripheral wall and opposite the base with the storage volume therebetween. This provides a way for a robotic container-handling vehicle, despite being designed to lift a smaller storage container, to lift the storage container in cooperation with other robotic container-handling vehicles. This is because it replicates the positions of the handles that would appear on the smaller storage container.

The handle may be located on a projection projecting from the base of the storage container, the projection and the peripheral wall having the same height. This provides a way to lift the storage container from an integral part of the storage container while leaving the storage container open for inserting and removing items.

The handle may be located on a lid of the storage container, wherein the lid is configured to releasably attach to the peripheral wall. This provides a storage volume without protruding components, retaining the versatility of the storage volume for storing larger items or items of unusual shapes.

In an aspect of the disclosure, there is provided a computer-readable medium comprising instructions which, when executed by a processor of a device, cause the device to perform the method as described above.

The device may be a control centre of the automated retrieval and storage system described above. The device may be one or more of the plurality of robotic container-handling vehicles as described above. Performing the method above may comprise sending one or more control signals to the plurality of robotic container-handling vehicles as described above.

In an aspect of the disclosure, there is provided a robotic container-handling vehicle configured to lift a storage container according to the method as described above in cooperation with one or more other robotic container-handling vehicles. The robotic container-handling vehicle may be according to any of the features described above for performing the method. This increases the size of storage container that the robotic container-handling vehicle can lift.

It is to be understood that the above detailed description and general disclosures are intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method for handling a storage container in an automated storage and retrieval system, the method comprising:
lifting the storage container using a plurality of robotic container-handling vehicles in cooperation.

2. The method of claim 1, wherein each robotic container-handling vehicle of the plurality of robotic container-handling comprises:
a vehicle body;
a cantilever element protruding from the vehicle body; and
a gripping device configured to be raised or lowered from the cantilever element, wherein the gripping device is configured to releasably engage the storage container.

3. The method of claim 2, wherein:
the cantilever element defines an overhang area;
a base of the storage container defines a base area; and
the base area is greater than the overhang area.

4. The method of claim 2 or 3, wherein:
the gripping device comprises a first gripper plate having one or more first gripping element protruding from the first gripper plate; and
the one or more first gripping element is configured to releasably grip the storage container.

5. The method of claim 4, wherein the gripping device comprises:
a second gripper plate having one or more second gripping element protruding from the second gripper plate, wherein the one or more second gripping element is configured to releasably grip the storage container,
wherein:
the first gripper plate is suspended below a distal portion of the cantilever element;
the second gripper plate is suspended below a proximal portion of the cantilever element; and
the first gripper plate and second gripper plate are configured to be raised or lowered and grip the storage container independently of the other.

6. The method of claim 4 or 5, wherein:
the one or more first gripping element is positioned on a midline of the first gripper plate; and/or
the one or more second gripping element is positioned on a midline of the second gripper plate.

7. The method of any preceding claim, comprising one or more of:
before the lifting, positioning the plurality of robotic container-handling vehicles symmetrically around storage container;
before the lifting, positioning the plurality of robotic container-handling vehicles such that one robotic container-handling vehicle is positioned at each corner of storage container; and
before the lifting, positioning the plurality of robotic container-handling vehicles such that each robotic container-handling vehicle is on either a first side of the storage container or a second side of the storage container, wherein second side is opposite the first side.

8. The method of any preceding claim, comprising one or more of:
raising the storage container using the plurality of robotic container-handling vehicles in cooperation from a stack of storage containers;
after the lifting, moving the storage container using the plurality of robotic container-handling vehicles in cooperation from a first position to a second position; and
lowering the storage container using the plurality of robotic container-handling vehicles in cooperation onto a stack of storage containers.

9. An automated storage and retrieval system for storing and retrieving storage containers, the system comprising:
a storage framework; and
a plurality of robotic container-handling vehicles configured to lift a storage container in cooperation, wherein the plurality of container-handling robots are configured to store and retrieve the storage container into and out of the storage framework,
wherein the storage framework comprises:
a plurality of vertical frame members; and
a rail system arranged across the vertical frame members, wherein the rail system comprises rails arranged to guide movement of the plurality of container-handling vehicles across the framework, wherein the rail system defines access openings for lifting and lowering the storage container through the rail system.

10. The automated storage and retrieval system of claim 9, wherein each robotic container-handling vehicle of the plurality of robotic container-handling comprises:
a vehicle body;
a cantilever element protruding from the vehicle body; and
a gripping device configured to be raised or lowered from the cantilever element, wherein the gripping device is configured to releasably engage the storage container,
wherein:
the cantilever element defines an overhang area;
the access openings include a first subset of access openings each having a first access area; and
the first access area is greater than the overhang area.

11. A storage container for storing in the automated storage and retrieval system of claim 9 or 10, wherein the storage container is configured to be lifted by the plurality of robotic container-handling vehicles in cooperation.

12. The storage container of claim 11, comprising:
a base;
a peripheral wall arranged around a periphery of the base and substantially perpendicular to the base, such that the base and the peripheral wall define a storage volume; and
a handle for suspending the storage container therefrom, wherein the handle is located away from the peripheral wall and opposite the base with the storage volume therebetween.

13. The storage container of claim 12, wherein either:
the handle is located on a projection projecting from the base, the projection and the peripheral wall having the same height; or
the handle is located on a lid of the storage container, wherein the lid is configured to releasably attach to the peripheral wall.

14. A computer-readable medium comprising instructions which, when executed by a processor of a device, cause the device to perform the method of any of claims 1-8.

15. A robotic container-handling vehicle configured to lift a storage container according to the method of any of claims 1-8 in cooperation with one or more other robotic container-handling vehicles.
